# EUROPÄISCHE PATENTSCHRIFT

(11) **EP 0 844 063 B1**
(45) Veröffentlichungstag und Bekanntmachung des Hinweises auf die Patenterteilung: **22.08.2001**
(21) Anmeldenummer: 97119767.8
(22) Anmeldetag: 12.11.1997
(51) Int. Cl.: B29C 65/20

(54) **Schweissvorrichtung**
Welding apparatus
Appareil de soudage

(30) Priorität: 20.11.1996 DE 29620216 U; 03.11.1997 DE 29719434 U
(43) Veröffentlichungstag der Anmeldung: 27.05.1998
(73) Patentinhaber: WEGENER GmbH, D-52074 Aachen (DE)
(72) Erfinder: Weissfloch, Reiner, Dr., 52223 Stolberg (DE)
(74) Vertreter: Paul, Dieter-Alfred, Dipl.-Ing.

(56) Entgegenhaltungen:
- CH-A- 619 175
- US-A- 4 146 419
- US-A- 5 169 052

## Beschreibung

Die Erfindung betrifft eine Schweißvorrichtung zum überlappenden Verschweißen von Folienrändern, mit einem Heizkörper, über dessen Heizflächen die Folienränder zum Zwecke ihrer Plastifizierung führbar sind und der freibeweglich aufgehängt ist.

Schweißvorrichtungen der vorbeschriebenen Art werden insbesondere zur Verschweißung von Folien im Deponiebau verwendet. Die Folien dienen der Abdichtung der Deponiesohle. Dabei werden hohe Anforderungen an die Qualität der Verschweißung gestellt.

Eine solche Schweißvorrichtung ist beispielsweise aus der DE 40 000 17 A1 oder der US 5,169,052 bekannt. Sie weist eine Einlaufseite auf, über die die überlappend ausgelegten Folienränder beim Verfahren der Schweißvorrichtung übereinander einlaufen und über einen keilförmigen Heizkörper geführt werden. Dieser keilförmige Heizkörper ist liegend angeordnet, d. h. die beiden Keilflächen, die gleichzeitig auch die Heizflächen bilden, liegen übereinander. Der Heizkörper ist mit seinem stumpfen Ende zur Einlaufseite hin gerichtet. Der obere Folienrand wird dabei über die obere Heizfläche und der unten liegende Folienrand über die untere Heizfläche geführt. Beide Heizflächen vereinigen sich zur Auslaufseite hin in einer linienförmigen Keilspitze, wo die beiden Folienränder mittels dort vorgesehener Andrück- und Vortriebsrollen zusammengeführt und aufeinandergedrückt werden. Die Andrück- und Vortriebsrollen ziehen die Folienränder in die Schweißvorrichtung hinein und sorgen so für den Vortrieb der Schweißvorrichtung.

Bei der bekannten Schweißvorrichtung ist der Heizkörper zwischen einer in Richtung auf die Einlaßseite zurückgezogenen Stellung und einer Betriebsstellung, in der die Keilspitze sich in unmittelbarer Nähe der Andrück- und Vortriebsrollen befindet, beweglich geführt. In der Betriebsstellung werden die Folienränder unter Andruck auf die beheizten Flächen des Heizkörpers geführt. Trotz dieser in einer Ebene gegebenen Verschiebemöglichkeit ist die Stellung des Heizkörpers jedoch nicht immer optimal. Für die gleichmäßige Erhitzung der Folienränder an den beiden Heizflächen ist es aber wesentlich, daß der Heizkörper eine Stellung einnimmt, bei der die Folienränder über eine identische Strecke und möglichst auch mit dem gleichen Anpressdruck an den Heizflächen anliegen. Dies ist mit der bekannten Verschiebemöglichkeit nicht gesichert.

Um diesen Nachteil zu vermeiden, ist in der US 4,146,419 eine Schweißvorrichtung beschrieben, bei der der keilförmige Heizkörper freibweglich um eine zu den Heizflächen parallelen und quer zur vorgesehenen Bewegungsrichtung der Folienränder gerichteten Achse schwenkbar aufgehängt ist (vgl. Figuren 10 und 11). Die Aufhängung ist jedoch kinematisch kompliziert und in manchen Fällen immer noch nicht anpassungsfähig genug.

Der Erfindung liegt demnach die Aufgabe zugrunde, die Aufhängung des Heizkörpers bei einer Schweißvorrichtung der eingangs genannten Art so auszubilden, daß die beiden Folienränder möglichst in gleicher Weise erwärmt werden.

Diese Aufgabe wird erfindungsgemäß dadurch gelöst, daß der Heizkörper an wenigstens einem Blattfederarm federnd aufgehängt ist. Diese Aufhängung des Heizkörpers zeichnet sich durch konstruktive Einfachheit aus. Dabei erschöpft sich die Nachgiebigkeit nicht nur senkrecht zu den Heizflächen, d.h. nach oben oder nach unten. Die Blattfeder läßt auch eine Verdrehung des Heizkörpers um eine Horizontalachse zu, die sich quer zur vorgesehenen Bewegungsrichtung der Folienränder erstreckt. Die Blattfeder ermöglicht also eine optimale Anpassung der Stellung des Heizkörpers an den Verlauf der Folienränder.

Dabei sollte die Aufhängung in der Weise geschehen, daß der Heizkörper unbelastet eine schon weitgehend optimale Stellung für den Einlauf der Folienränder hat. Die selbsttätige Anpassung geschieht dann aufgrund des Anlagedruckes der Folienränder gegen die Wirkung der Blattfeder, die relativ schwach ausgebildet sein kann und deshalb einer optimalen Anpassung kaum Widerstand entgegenbringt.

Für die Aufhängung des Heizkörpers reicht schon ein einziger Blattfederarm. Es können jedoch auch mehrere Blattfederarme vorgesehen sein, die zweckmäßigerweise an beiden Seiten des Heizkörpers enden. Dabei sollten sie sich im wesentlichen in Richtung der vorgesehenen Bewegungsrichtung der Folienränder erstrecken, und zwar zum Heizkörper hin in Ausgangsrichtung der Schweißvorrichtung, also bei eingangsseitiger Einspannung.

Selbstverständlich besteht die Möglichkeit, die bewegliche Aufhängung der Heizkörper mit dem Stand der Technik bekannten Verschiebeeinrichtungen zu kombinieren, indem der Heizkörper an einem in der vorgesehenen Bewegungsrichtung der Folienränder verschieblichen Schlitten aufgehängt ist. Dieser Schlitten ermöglicht es, den Heizkörper bei einem Stillstand der Vorrichtung in eine von den Andrück- und Vortriebsrollen entfernte, zurückgezogene Stellung zu bringen, um eine Überhitzung der Folienränder zu vermeiden.

In der Zeichnung ist die Erfindung anhand von Ausführungsbeispielen näher veranschaulicht. Es zeigen:
- Figur 1: eine erfindungsgemäße erste Schweißvorrichtung in einer Schnittdarstellung in der Ebene A-A gemäß Figur 2;
- Figur 2: die Vorrichtung gemäß Figur 1 von der Auslaufseite her gesehen;
- Figur 3: die Vorrichtung gemäß den Figuren 1 und 2 in der Seitenansicht X gemäß Figur 2 mit abgenommener Abdeckung;
- Figur 4: einen Teil der Vorrichtung gemäß den Figuren 1 bis 3 von der Einlaßseite her gesehen;
- Figur 5: das Teil gemäß Figur 4 mit einer anderen Klinkendarstellung;
- Figur 6: eine zweite erfindungsgemäße Schweißvorrichtung in der Seitenansicht (mit teilweisen Weglassungen) und
- Figur 7: eine Draufsicht auf die Schweißvorrichtung gemäß Figur 6 (ebenfalls mit teilweisen Weglassungen).

Die in den Figuren dargestellte Schweißvorrichtung 1 weist ein Gehäuse 2 auf, an dem ein elektrischer Antriebsmotor 3 angeflanscht ist. An derselben Seite des Gehäuses 2 ist ein oberer Träger 4 und darunter ein unterer Träger 5 befestigt.

An dem oberen Träger 4 ist über eine horizontale Gelenkachse 6 ein Schwenkkörper 7 aufgehängt, in dem eine obere Andrück- und Vortriebswalze 8 um eine horizontale Achse drehbar gelagert ist. An dem unteren Träger 5 ist genau unterhalb der oberen Andruck- und Vortriebswalze eine weitere Andrückwalze 9 gelagert. Der Schwenkkörper 7 ist über eine Druckfeder 10 in Richtung auf die untere Andrückwalze 9 federbelastet. Die Federbelastung kann durch einen handbetätigten Mechanismus 11 weggenommen werden, der hier nicht näher beschrieben werden soll, weil er nicht zur Erfindung gehört.

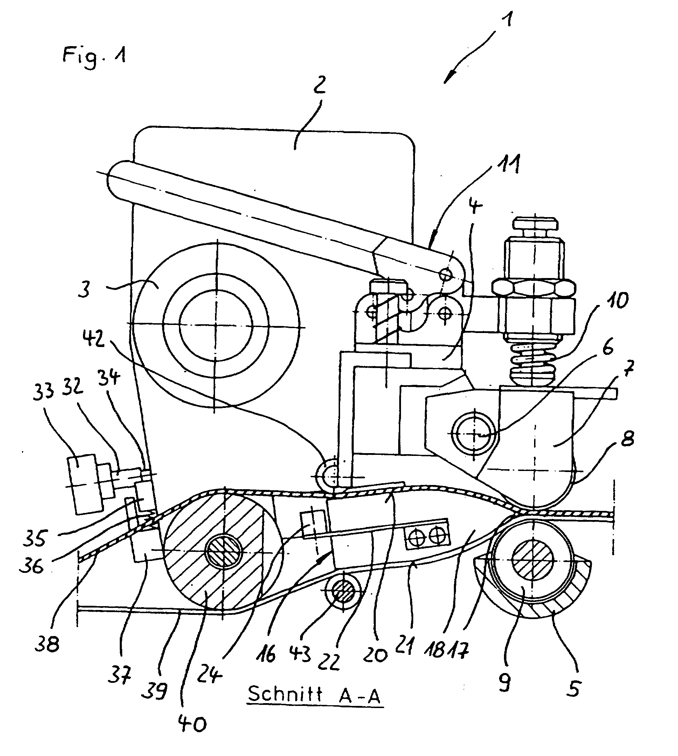

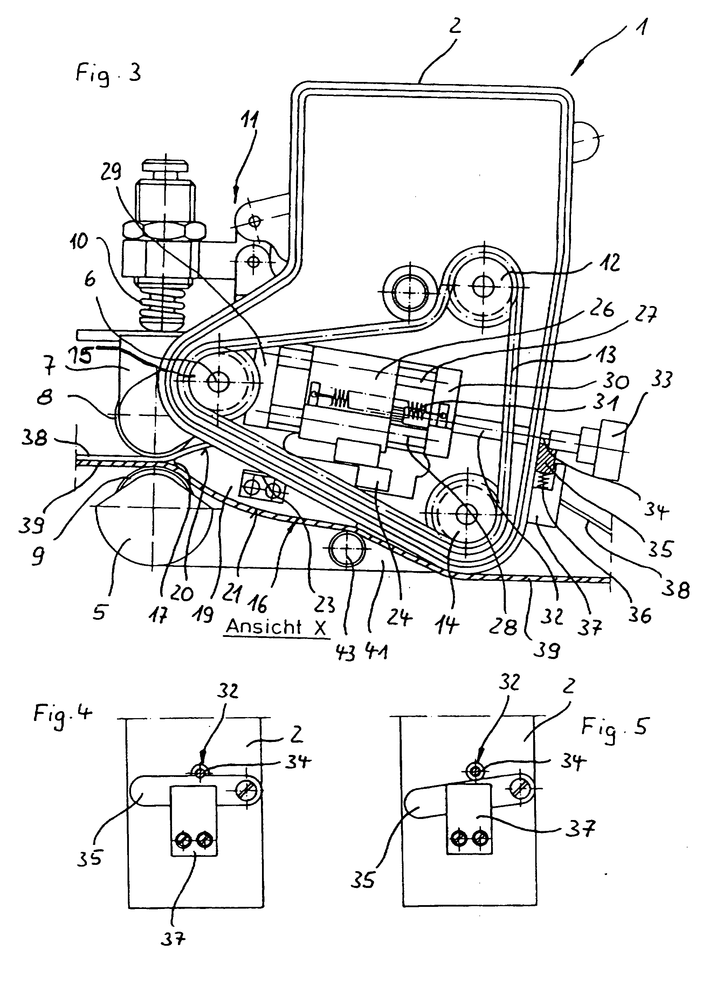

wie insbesondere aus Fig. 3 zu ersehen ist, ragt in das Gehäuse 2 ein Antriebsritzel 12 des Antriebsmotors 3 hinein. Das Antriebsritzel 12 treibt eine Antriebskette 13 an, die über ein unteres Umlenkrad 14 zu einem Abtriebsrad 15 geht, welches koaxial zu der Gelenkachse 6 liegt. Das Abtriebsrad 15 ist über ein hier nicht näher dargestelltes Stirnradgetriebe mit der oberen Andrück- und Vortriebswalze 8 verbunden. Auf diese Weise wird diese Andrück- und Vortriebswalze 8 von dem Antriebsmotor 3 angetrieben, und zwar in der Ansicht gemäß Fig. 1 gegen den Uhrzeigersinn.

Die Schweißvorrichtung 1 weist ferner einen keilförmigen Heizkörper 16 auf, dessen Keilspitze 17 bis in den Bereich der oberen Andrück- und Vortriebswalze 8 und der unteren Andrückwalze 9 hineinragt. Er hat zwei senkrechte Seitenwandungen 18, 19 sowie obere und untere Heizflächen 20, 21. An beiden Seitenwandungen 18, 19 sind blattfederartige Tragarme 22, 23 befestigt, die über einen Trägerkörper 24 miteinander verbunden sind. Tragarme 22, 23 erlauben eine Verschwenkung des Heizkörpers 16 um eine horizontale Achse.

Der Trägerkörper 24 ist an einem Schlitten 26 innerhalb des Gehäuses 2 befestigt. Der Schlitten 26 ist auf zwei übereinander angeordnete Führungsbolzen 27, 28 im wesentlichen horizontal mit leichter Neigung nach unten in Richtung auf die Einlaßseite hin verschieblich geführt. Die Führungsbolzen 27, 28 sind über Endstücke 29, 30 miteinander verbunden, welche wiederum innerhalb des Gehäuses 2 gerätefest gehalten sind. An dem einlaßseitigen Endstück 30 ist eine Zugfeder 31 befestigt, deren anderes Ende an dem Schlitten 26 angebracht ist. Die Zugfeder 31 ist bestrebt, den Schlitten 26 zur Einlaßseite hin zu bewegen, also aus der in den Figuren dargestellten Betriebsstellung in eine zur Einlaßseite hin zurückgezogenen Stellung.

Mit dem Schlitten 26 verbunden ist eine Betätigungsstange 32, die an der Einlaßseite (Ansicht X) herausragt und in einem Bedienknopf 33 endet. An dem aus dem Gehäuse 2 herausragenden Teil weist die Betätigungsstange 32 eine Ringnut 34 auf, die mit einer schwenkbar am Gehäuse 2 angelenkten Sperrklinke 35 korrespondiert. Die Sperrklinke 35 ist untenseitig mit einer Druckfeder 36 in Richtung auf die Betätigungsstange 32 federbelastet, wobei sich die Druckfeder 36 an einem an das Gehäuse 2 angeschraubten Stützkörper 37 abstützt, welcher auch der Führung der Sperrklinke 35 dient.

In der in den Figuren 3 und 4 gezeigten Stellung faßt die Sperrklinke 35 in die Ringnut 34 ein. Auf diese Weise ist die Betätigungsstange 32 und damit der Schlitten 26 und folglich auch der Heizkörper 16 in der gezeigten Betriebsstellung blockiert. Wird die Sperrklinke 35 durch die Betätigung ihres freien Endes gegen die Wirkung der Druckfeder 36 nach unten gedrückt, fährt sie aus dem Wirkungsbereich der Ringnut 34 heraus und gibt damit die Betätigungsstange 32 frei. Der Schlitten 26 wird dann unter der Wirkung der Zugfeder 31 zur Einlaßseite hin bewegt und nimmt dabei den Heizkörper 16 mit. Auch er wird dann bis zum Anschluß des Schlittens 26 an das Endstück 30 zur Einlaßseite hin bewegt. Aus dieser Stellung kann der Heizkörper 16 wieder in die gezeigte Betriebsstellung bewegt werden, indem die Betätigungsstange 32 über den Bedienknopf 33 wieder in Richtung des Gehäuses 2 gegen die Wirkung der Zugfeder 31 soweit gedrückt wird, bis die Sperrklinke 35 in die Ringnut 34 einschnappt. Damit ist der Heizkörper 16 wieder in der Betriebsstellung blockiert, wenn auch leicht lösbar.

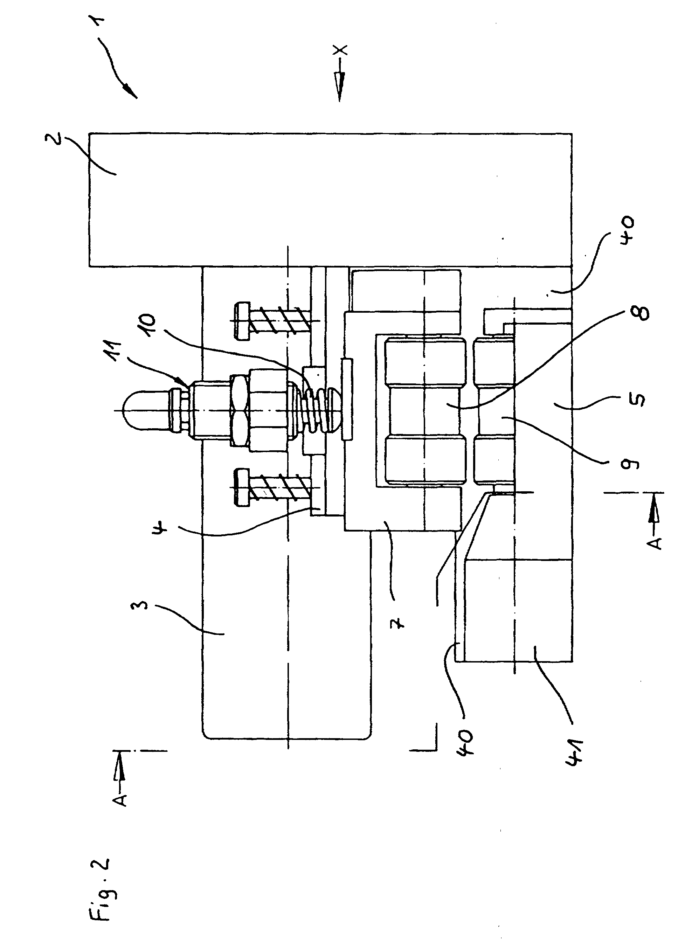

wie sich insbesondere aus den Figuren 1 und 3 ersehen läßt, treten über die Einlaßseite der Schweißvorrichtung 1 ein oberer Folienrand 38 und ein unterer Folienrand 39 ein, wobei der obere Folienrand 38 über die Oberseite und der untere Folienrand 39 über die Unterseite eines Rundkörpers 40 gleiten. Der Rundkörper 40 ist mit dem Gehäuse 2 verbunden und trägt über einen Längsträger 41 (Fig. 2) den unteren Träger 5 mit der Andrückwalze 9. Der Durchmesser des Rundkörpers 40 ist größer als die Höhe des Heizkörpers 16. Im Bereich der stumpfen Seite des Heizkörpers 16 befinden sich Andrückrollen 42, 43, wobei die obere Andrückrolle 42 an dem Gehäuse 2 und die untere Andrückrolle 43 an dem Längsträger 41 angebracht sind. Die Andrückrollen 42 sorgen für eine Anlage der Folienränder 38, 39 an die Heizfläche 20, 21 des Heizkörpers 16. Im Bereich der oberen Andrück- und Vortriebswalze 8 und der unteren Andrückwalze 9 werden sie aufgrund des dort herrschenden Anpreßdrucks zusammengeführt und -gepreßt, wobei sich die durch die Heizflächen 20, 21 erhitzten Flächen der Folienränder 38, 39 miteinander verbinden und hierdurch verschweißt werden. An der Auslaßseite verlassen die verschweißten Folienränder 38, 39 die Schweißvorrichtung 1.

Der Antrieb der Schweißvorrichtung 1 erfolgt über den Reibschluß der oberen Andrück- und Vortriebswalze 8 mit dem oberen Folienrand 38. Die Schweißvorrichtung 1 zieht sich somit selbst durch den Überlappungsbereich der Folienränder 38, 39. Bei Unterbrechung des Antriebes, also Stillstand der Schweißvorrichtung 1 drückt die Bedienungsperson die Sperrklinke 35 nach unten und löst damit die Blockierung des Schlittens 26. Dies führt zu einem Zurückziehen des Heizkörpers 16 in einen Bereich, wo die Folienränder 38, 39 keinen direkten Kontakt mit den Heizflächen 20, 21 haben. Hierdurch wird ein Überhitzen der Folienränder 38, 39 auf den einander zugewandten Seiten vermieden.

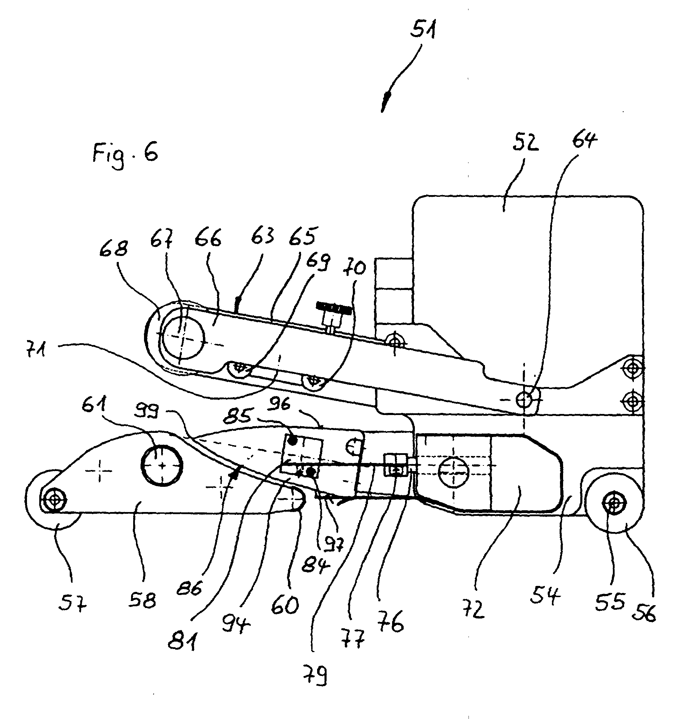

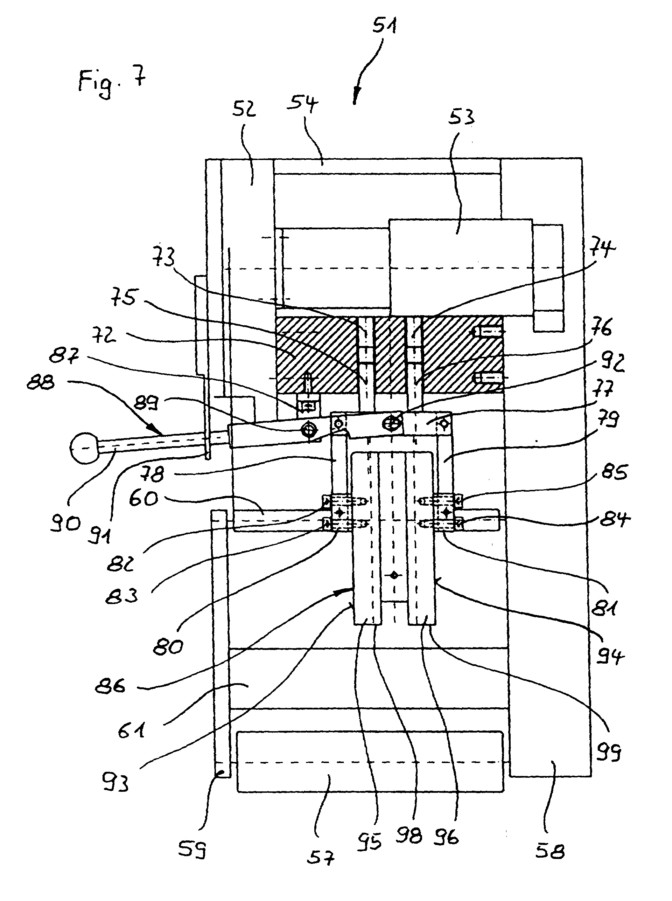

Die in den Figuren 6 und 7 dargestellte Schweißvorrichtung 51 ist im Grundaufbau ähnlich der in den Figuren 1 bis 5 dargestellten Schweißvorrichtung 1. Die Schweißvorrichtung 51 hat ein Gehäuse 52, an dem ein elektrischer Antriebsmotor 53 (in Fig. 5 weggelassen) angeflanscht ist. Die Schweißvorrichtung 51 hat ein Fahrwerk 54, an dem eingangsseitig eine erste Fahrachse 55 mit einer Walze 56 und ausgangsseitig eine Fahrwalze 57 gelagert sind. Die Fahrwalze 57 ist auf der einen Seite an einem ersten Träger 58 gelagert, der bis zur Eingangsseite durchgeht. Auf der anderen Seite ist die Fahrwalze 57 an einem zweiten Träger 59 gelagert, welcher mit der Achse einer Andrückrolle 60 starr verbunden ist. Zwischen den beiden Trägern 58, 59 ist eine Andrückrolle 61 gelagert, welche von dem Antriebsmotor 53 über einen Kettentrieb angetrieben wird, der sich in dem Träger 58 erstreckt.

An dem Gehäuse 52 ist ein Schwenkkörper 63 (in Figur 7 komplett weggelassen) um eine horizontale Achse 64 schwenkbar gelagert. Der Schwenkkörper 63 hat zwei Schwenkarme 65, 66, deren freie Enden durch eine Antriebsachse 67 verbunden sind. Auf der Antriebsachse 67 befindet sich eine Andrückrolle 68, die mit der Andrückrolle 61 korrespondiert. Zwischen den Schwenkarmen 65, 66 sind zudem Andrückrollen 69, 70 angeordnet, die an einem gemeinsamen Andrückgestell 71 gelagert sind. Die Andrückrollen 68 werden ebenfalls von dem Antriebsmotor 53 über einen Kettentrieb angetrieben, der in dem Schwenkarm 65 gekapselt ist.

Das Fahrwerk 54 weist einen Querträger 72 auf, der in Fig. 7 geschnitten dargestellt ist. In dem Querträger 72 befinden sich zwei parallele und horizontal sich erstreckende Führungsbohrungen 73, 74, in die passende Führungsbolzen 75, 76 eingesetzt sind. Diese sind mit einem Querbalken 77 verbunden, von deren freien Enden sich zwei Blattfedern im wesentlichen horizontal und in Richtung auf die Ausgangsseite der Schweißvorrichtung 51 erstrecken. Die Blattfedern 78, 79 sind nach oben und unten biegsam. Ihre freien Enden sind in Befestigungsblöcke 80, 81 eingespannt, welche über jeweils zwei Schrauben 82, 83 bzw. 84, 85 an einem keilförmigen Heizkörper 86 befestigt sind. Der Heizkörper 86 ist also an den Blattfedern 78, 79 im wesentlichen vertikal verschwenkbar aufgehängt, wobei die Blattfedern 78, 79 auch eine Schwenkbewegung des Heizkörpers 86 um die horizontale Querachse erlauben.

An einer Halterung 87 ist ein Betätigungshebel 88 um eine Hochachse 89 verschwenkbar gelagert. Der Betätigungshebel 88 hat einen nach außen herausragenden Betätigungsarm 90, der innerhalb eines Kulissenblechs 91 in einer Horizontalebene verschwenkbar ist und in zwei Stellungen durch Einrastung fixiert werden kann. Der Betätigungshebel 88 ist zur anderen Seite hin über ein Gelenk 92 mit dem Querbalken 77 verbunden. Mit Hilfe des Betätigungshebels 88 kann deshalb die Einheit aus Führungsbolzen 75, 76, Querbalken 77, Blattfedern 78, 79, Befestigungsblöcken 80, 81 und Heizkörper 86 - geführt durch die Führungsbohrungen 73, 74 - horizontal zwischen einer zur Eingangsseite hin und einer zur Ausgangsseite hin verschobenen Stellung bewegt werden.

Der Heizkörper 86 hat zwei senkrechte Seitenwandungen 93, 94 sowie jeweils zwei obere und zwei untere Heizflächen 95, 96, 97, wobei die Heizflächen 95, 96, 97 jeweils einer Seite einen Abstand zueinander haben. Die jeweils übereinanderliegenden Heizflächen 95, 96, 97 beider Seiten laufen in Keilspitzen 98, 99 aus.

Für den Betrieb der Schweißvorrichtung 51 wird der Schwenkkörper 63 aus der in Fig. 6 gezeigten Stellung nach unten geschwenkt, und zwar mit Hilfe einer hier nicht näher dargestellten Einrichtung ähnlich der Einrichtung, die bei der Schweißvorrichtung 1 gemäß den Figuren 1 bis 5 zu sehen ist. Dies bringt die Andrückrollen 68 in Anlage zu der Andrückrolle 61. Über die Einlaßseite tritt ein hier nicht gezeigter, oberer Folienrand ein, und zwar in der Darstellung gemäß Fig. 7 als rechtsseitiger Folienrand unterhalb des Antriebsmotors 53, jedoch oberhalb des Trägers 58 und des Querträgers 72. Der obere Folienrand läuft dann über die oberen Heizflächen 95, 96, wobei er durch die Andrückrollen 69, 70 auf diese Heizflächen 95, 96 gedrückt wird. An dem oberen Folienrand werden hierdurch zwei plastifizierte Streifen im Abstand der Heizflächen 95, 96 gebildet.

In der Darstellung gemäß Fig. 7 läuft gleichzeitig eingangsseitig ein linksseitiger unterer Folienrand (nicht gezeigt) von unten her in die Schweißvorrichtung 51 hinein. Er wird an der Unterseite des Querträgers 72 anliegend geführt und gelangt so auf die unteren Heizflächen 97, wobei er durch die Andrückrolle 68 geführt wird. Auch der untere Folienrand erhält zwei streifenförmig plastifizierte Bereiche. Oberer und unterer Folienrand laufen zwischen den Andrückrollen 69, 70 und der Andrückrolle 61 zusammen, und zwar in der Weise, daß die jeweils plastifizierten Streifen aufeinander zu liegen kommen. Durch den von den Andrückrollen 69, 70 aufgeprägten Druck verbinden sich diese Streifen im Sinne einer Verschweißung, wobei zwischen beiden Schweißnähten ein unverschweißter Bereich bleibt, so daß dort ein Prüfkanal entsteht. Durch Aufgabe von Druckluft kann über diesen Prüfkanal festgestellt werden, ob die Schweißnähte undicht sind.

Die Aufhängung des Heizkörpers 86 an den beiden Blattfedern 78, 79 ermöglicht dem Heizkörper 86, sich den von den Folienrändern ausgehenden Kräften hinsichtlich Lager und Ausrichtung so anzupassen, daß ein Kraftausgleich in dem Sinne bewirkt wird, daß die Folienränder mit möglichst gleicher Kraft auf den Heizflächen 95, 96, 97 aufliegen. Dies sichert eine gleichmäßige Plastifizierung der Folienränder und damit eine hohe Qualität der Schweißnähte. Bei Stillstand der Schweißvorrichtung 51 kann der Heizkörper 86 aus der in Fig. 6 gezeigten Stellung in die in Fig. 7 gezeigte, in Richtung auf die Eingangsseite zurückgezogene Stellung verschoben werden, und zwar mit Hilfe des Betätigungshebels 88. In dieser Stellung haben die einlaufenden Folienränder Abstand zu dem Heizkörper 86, so daß sie nicht überhitzt werden.

## Patentansprüche

1. Schweißvorrichtung (1) zum überlappenden Verschweißen von Folienrändern (38, 39), mit einem Heizkörper (16, 86), über dessen Heizflächen (20, 21, 95, 96, 97) die Folienränder (38, 39) zum Zwecke ihrer Plastifizierung führbar sind und der freibeweglich aufgehängt ist, **dadurch gekennzeichnet,** daß der Heizkörper (16, 86) an wenigstens einem Blattfederarm (22, 23, 78, 79) federnd aufgehängt ist.

2. Schweißvorrichtung nach Anspruch 1, **dadurch gekennzeichnet**, daß der Heizkörper (16, 86) an beiden Seiten (18, 19, 93, 94) an je einem Blattfederarm (22, 23, 78, 79) aufgehängt ist.

3. Schweißvorrichtung nach Anspruch 1 oder 2, **dadurch gekennzeichnet**, daß sich der bzw. die Blattfederarm(e) (22, 23, 78, 79) im wesentlichen in Richtung der vorgesehenen Bewegungsrichtung der Folienränder (38, 39) erstrecken.

4. Schweißvorrichtung nach Anspruch 3, **dadurch gekennzeichnet**, daß sich der bzw. die Blattfederarm(e) (22, 23, 78, 79) zum Heizkörper (16, 86) hin in Ausgangsrichtung der Schweißvorrichtung (1, 51) erstrecken.

5. Schweißvorrichtung nach einem der Ansprüche 1 bis 4, **dadurch gekennzeichnet**, daß der Heizkörper (16, 86) an einem in der vorgesehenen Bewegungsrichtung der Folienränder (38, 39) verschieblichen Schlitten (26, 75, 76, 77) aufgehängt ist.

## Claims

1. Welding apparatus (1), for welding the overlapping edges of sheeting or film (38, 39), having a heating element (16, 86), over the heating surfaces (20, 21, 95, 96, 97) of which the edges of the sheet or film (38, 39) can be guided with the object of plasticizing them and which is suspended so as to be able to move freely, **characterized in that** the heating element (16, 86) is flexibly suspended from at least one leaf-spring arm (22, 23, 78, 79).

2. Welding apparatus according to Claim 1, **characterized in that** the heating element (16, 86) is suspended from a leaf-spring arm (22, 23, 78, 79) on each side (18, 19, 93, 94).

3. Welding apparatus according to Claim 1 or 2, **characterized in that** the leaf-spring arm or arms (22, 23, 78, 79) extend substantially in direction of the proposed direction of movement of the edges of the sheet or film (38, 39).

4. Welding apparatus according to Claim 3, **characterized in that** the leaf-spring arm or arms (22, 23, 78, 79) extend towards the heating element (16, 86) in direction of the exit of the welding apparatus (1, 51).

5. Welding apparatus according to one of Claims 1 to 4, **characterized in that** the heating element (16, 86) is suspended from a sliding carriage (26, 75, 76, 77), which can be displaced in the proposed direction of movement of the edges of the sheet or film (38, 39).

## Revendications

1. Dispositif de soudage (1) pour souder entre eux des bords de film (38, 39) qui se chevauchent, comprenant un corps de chauffe (16, 86) sur les surfaces chauffantes (20, 21, 95, 96, 97) duquel il est possible de faire passer les bords du film (38, 39) afin de les rendre plastiques, et qui est suspendu de manière à pouvoir se déplacer librement, caractérisé en ce que le corps de chauffe (16, 86) est suspendu à au moins une branche de ressort à lames (22, 23, 78, 79) de façon à faire ressort.

2. Dispositif de soudage selon la revendication 1, caractérisé en ce que le corps de chauffe (16, 86) est suspendu de chaque côté (18, 19, 93, 94) à une branche de ressort à lames (22, 23, 78, 79).

3. Dispositif de soudage selon la revendication 1 ou 2, caractérisé en ce que la ou les branches de ressorts à lames (22, 23, 78, 79) s'étendent essentiellement dans la même direction que celle prévue pour le déplacement des bords de film (38, 39).

4. Dispositif de soudage selon la revendication 3, caractérisé en ce que la ou les branches de ressorts à lames (22, 23, 78, 79) s'étendent vers le corps de chauffe (16, 86), en direction de la sortie du dispositif de soudage (1, 51).

5. Dispositif de soudage selon l'une des revendications 1 à 4, caractérisé en ce que le corps de chauffe (16, 86) est suspendu à un chariot (26, 75, 76, 77) pouvant être déplacé dans la même direction que celle prévue pour le déplacement des bords de film (38, 39).
